# EUROPEAN PATENT SPECIFICATION

(11) **EP 1 329 762 B1**
(45) Date of publication and mention of the grant of the patent: **29.08.2007**
(21) Application number: 02257921.3
(22) Date of filing: 15.11.2002
(51) Int. Cl.: F21V 8/00, G02B 6/00, G02F 1/1335, G02B 1/11

(54) **Light guide plate having anti-reflection layer, method of manufacturing the same, illumination device, and liquid crystal display**
Lichtleitplatte mit einer Antireflexionsschicht, Verfahren zu deren Herstellung, Beleuchtungsvorrichtung und Flüssigkristall-Anzeigevorrichtung
Plaque de guidage de lumière comprenant une couche antiréfléchissante, son procédé de production, dispositif d'éclairage et dispositif d'affichage à cristal liquide

(30) Priority: 28.12.2001 JP 2001400596
(43) Date of publication of application: 23.07.2003
(73) Proprietor: ALPS ELECTRIC CO., LTD., Ota-ku Tokyo 145 (JP)
(72) Inventor: Ishitaka, Yoshihiko, Ota-ku, Tokyo (JP)
(74) Representative: Kensett, John Hinton

(56) References cited:
- WO-A-01/29148
- WO-A-01/35128
- WO-A-99/29494
- OMORI S ET AL: "Illumination by subwavelength grating with antireflection effect" PROCEEDINGS OF THE SPIE - THE INTERNATIONAL SOCIETY FOR OPTICAL ENGINEERING SPIE-INT. SOC. OPT. ENG USA, vol. 4440, 29 July 2001 (2001-07-29), pages 285-292, XP002334170 ISSN: 0277-786X
- FOLEY M ET AL: "Technical Advances in Microstructured Plastic Optics for Display Applications" PROCEEDINGS OF THE 1999 SID INTERNATIONAL SYMPOSIUM, 18 May 1999 (1999-05-18), pages 1106-1109, XP007009000 SOCIETY OF INFORMATION DIPLAY , SID, SANTA ANA, CA, USA

## Description

### BACKGROUND OF THE INVENTION

### 1. Field of the Invention

The present invention relates to an illumination device and a liquid crystal display and, more particularly, to a configuration of an illumination device that is disposed and used on a front side of a liquid crystal panel.

### 2. Description of the Related Art

Illumination devices called front lights are widely used on a front side of reflection type liquid crystal displays as display sections of personal digital assistants and portable telephones of which the range of application is remarkably increasing recently. Specifically, the front lights are provided above (on a viewer's side of) liquid crystal panels to illuminate the liquid crystal panels from above. They may be accompanied by tablets that are data input units provided above the front lights as occasions demand.

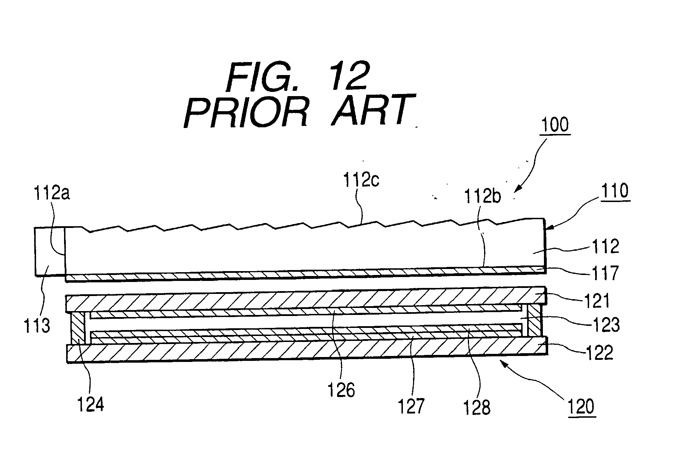

Fig. 12 is a sectional configuration diagram of a liquid crystal display having a front light, and a liquid crystal display 100 shown in the figure is constituted of a liquid crystal panel 120and a front light 110 disposed on a front side of the liquid crystal panel 120. In the liquid crystal panel 120, a liquid crystal layer 123 sealed with a sealant 124 is sandwiched between a top substrate 121 and a bottom substrate 122 that are provided in a face-to-face relationship with each other; a liquid crystal control layer 126 including an electrode and an alignment film is formed on an inner surface of the top substrate 121 (that faces the liquid crystal layer 123); and a reflection layer 127 constituted of a metal thin film having a high reflectance such as aluminum or silver and a liquid crystal control layer 128 including an electrode and an alignment film are formed on an inner surface of the bottom substrate 122 (that faces the liquid crystal layer 123) in that order.

The front light 110 is comprised of a light guide plate 112 in the form of a flat plate, and a rod-shaped light source 113 disposed on a side end face 112a of the light guide plate 112. Light emitted by the light source 113 is introduced into the light guide plate 112 from the side end face 112a of the light guide plate 112, and the light is reflected by a reflecting surface 112c of the light guide plate 112 having a prism feature formed thereon. The propagating direction of the light is thus changed to apply the same from an exit surface 112b of the light guide plate 112 to the liquid crystal panel 120.

An anti-reflection layer 117 is formed on the exit surface 112b of the front light 110 to allow light propagating in the light guide plate 112 to be efficiently extracted toward the liquid crystal panel 120, which also makes it possible to prevent reflection light from the reflection type liquid crystal panel 120 from being reflected and attenuated on a surface of the light guide plate 112.

Normally, a part obtained by periodically forming a plurality of layers made of materials having different refractive indices (that are typically SiO₂ layers and TiO₂ layers) is used as the anti-reflection layer 117, and each of the layers is formed with a predetermined thickness using film forming methods such as sputtering and vacuum deposition to provide the so-called 1/4λ optical condition, which allows light that has entered the anti-reflection layer 117 to be transmitted with high transmittance.

However, the above-described method for forming the anti-reflection layer 117 has many problems to be solved. Such a method for forming a plurality of layers having different refractive indices using vacuum deposition or sputtering has a problem in that the formation of such anti-reflection layers 117 results in low productivity and a very high manufacturing cost because it is carried out on a batch basis.

Further, since the anti-reflection effect is provided by combinations of the reflective indices and thicknesses of the layers that make up the anti-reflection layer 117, it is inherently difficult to achieve the anti-reflection effect in all visible wavelength regions. When an illumination device having such an anti-reflection layer is observed in a diagonal direction, another problem arises in that the anti-reflection layer appears with a tint of some color to reduce the reproducibility of a color to be displayed.

Further, since the layer has a multi-layer structure in which a plurality of layers are periodically formed, durability of the same can become problematic especially in an environment at a high temperature and humidity, which can put limits on efforts to maintain the reliability of the light guide plate and the front light.

As a simple method focused on productivity, a method for forming an anti-reflection layer has been proposed in which a solution of an organic compound that is controlled to have a relatively low refractive index is applied through immersion. However, in order to form an anti-reflection layer using this method, a material is required whose refractive index can be arbitrarily changed and from which a practical processing liquid can be produced, and it is difficult to form an anti-reflection layer that can provide a high anti-reflection effect because there is substantially no material that is satisfactory in both of controllability of the refractive index and ease of production of a processing liquid. Further, in order to achieve a practical anti-reflection effect, the application of the organic compound to the light guide plate must be followed by post-processes such as a heating process, which has resulted in a problem in that the post-processes can deteriorate the characteristics of the light guide plate.

Further prior art arrangements are known from WO 01/35128, XP002334170, WO99/29494 and XP 007009000. WO 01/35128 discloses a light guide plate into which light from a light source is introduced from a side end face thereof and from which light propagated therein exits at a surface thereof, wherein an anti-reflection layer is provided that has microscopic recesses/projections arranged and formed like a staggered lattice on the exit surface. WO99/29494 and XP 007009000 disclose injection moulded optical plates. XP 002334170 discloses a light guide plate on a front side of a liquid crystal display.

The invention has been made in order to solve the above-described problems and provides a light guide plate provided with an anti-reflection layer that can provide a high anti-reflection effect and that is highly reliable.

The invention also provides a method of manufacturing a light guide plate that allows a light guide plate having an anti- reflection layer as described above to be manufactured at a low cost easily.

The invention also provides an illumination device having a light guide plate with an anti-reflection layer as described above.

The invention also provides a liquid crystal display having an illumination device as described above.

### SUMMARY OF THE INVENTION

In order to solve the above problems, the invention adopts the following configurations.

According to the present invention in a first aspect, there is provided a light guide plate comprising a structure into which light from a light source is introduced at a side end face thereof and from which the light propagated therein exits at a bottom exit surface thereof, herein an anti-reflection layer having microscopic recesses or projections on a submicron order arranged and formed like a hexagonal lattice is provided on the exit surface, characterized in that the recesses or projections are arranged such that an effective pitch (Pe) between a first straight line, passing through the centre of a recess or projection and running parallel to the side end face, and a second straight line, passing through the centre of an adjacent recess or projection and running parallel to the side end face, in a main light guide direction, oriented within the plane of the light guide plate in a direction perpendicular to the side end face into which light from the light source is introduced, is about one-half a pitch (P) of the recesses or projections.

In the light guide plate having the above configuration, since the microscopic concave or convex features equal to or smaller than the wavelength of visible light are arranged and formed on the exit surface of the light guide plate, it is possible to prevent light incident upon the exit surface from being reflected, thereby improving the transmittance of light at the exit surface of the light guide plate. It is therefore a light guide plate that allows light propagating in the light guide plate to exit at the exit surface with high efficiency and that utilizes a light source with high efficiency to allow an illumination device to be configured with a high intensity.

In the light guide plate according to the invention, the microscopic recesses or projections arranged and formed as described above preferably have a pitch of 0.3 µm or less. Such a configuration allows light at a shorter wavelength side to be sufficiently transmitted, thereby providing an excellent anti-reflection effect. When the pitch exceeds 0.3 µm, a part of exiting light is reflected to reduce the transmittance at the exit surface. Further, light transmitted or reflected by the anti-reflection layer becomes likely to have a tint of some color, which reduces color reproducibility of display when used as a light guide plate for a front light provided on a front side of a liquid crystal panel, for example. While the effect of preventing reflection of light becomes more significant the smaller the pitch, the pitch is preferably 0.2 µm or more from a practical point of view because it becomes more difficult to form the recesses or projections in a precise arrangement the smaller the pitch.

The staggered lattice arrangement allows the recesses or projections to be provided in a density higher than that of an arrangement of the recesses or projections in the form of a tetragonal lattice and the resulting small effective pitch makes it possible to improve the anti-reflection effect and to prevent light transmitted or reflected by the anti-reflection layer from being tinted.

"An effective pitch" in the context of the invention is equivalent to the distance between a first straight line that passes through the center of a certain projection (recess) and a second straight line that passes through the center of a projection adjacent to the projection and that is in parallel with the first straight line. The effective pitch of the plurality of projections arranged like a tetragonal lattice in the arranging direction of the projections is the same as the pitch of those projections, and the effective pitch in the diagonal direction of the tetragonal lattice is 1/√2 of the pitch of the projections and is slightly smaller than the actual pitch. Further, when the projections of the anti-reflection layer are arranged in a highest density in a staggered arrangement like a hexagonal lattice, the effective pitch is as small as 1/2 of the actual pitch.

The "main light guide direction in the plane of the light guide plate" is a macroscopic propagating direction of light introduced into the light guide plate from the light source disposed on the side end face of the light guide plate, and it is normally a direction from the side end face where the light source is disposed toward another side end face that faces the side end face.

In the light guide plate according to the invention, the effective pitch of the recesses or projections in the main light guide direction in the plane of the light guide plate is preferably 0.15 µm or less. Such a configuration makes it possible to provide a light guide plate which achieves a more excellent anti-reflection effect and which prevents light transmitted or reflected thereby from being tinted.

A method of manufacturing a light guide plate as described above, according to the invention, comprises injection molding utilizing a die, wherein the die has microscopic recesses or projections on a submicron order arranged and formed in the form of a lattice on a wall thereof associated with a light guide plate exit surface of a cavity section for forming the light guide plate and the shape of the microscopic recesses or projections is transferred to the light guide plate during injection molding.

Since the use of a manufacturing method having such a configuration makes it possible to form an anti-reflection layer on the exit surface at the same time when the light guide plate is injection-molded, there is no need for providing a separate step for forming or applying an anti-reflection layer, which makes it possible to manufacture a light guide plate having an anti-reflection layer quite efficiently.

In the method of manufacturing a light guide plate according to the invention, it is preferable to use a die that has microscopic recesses or projections in the form of a staggered lattice arranged and formed with a pitch of 0.3 µm or less on the wall of the cavity section associated with the light guide plate exit surface. Such a configuration makes it possible to easily manufacture a light guide plate which has a high anti-reflection effect and which prevents light transmitted or reflected thereby from being tinted.

An illumination device according to the invention is characterized in that it has any of the above-described light guide plates and a light source disposed on a side end face of the light guide plate. Since the illumination device with such a configuration has a light guide plate according to the invention as described above, it can cause light introduced into the light guide plate from the light source to exit from the exit surface of the light guide plate. Thus, it is an illumination device which utilizes the light source efficiently and which has a high intensity.

A liquid crystal display according to the invention is characterized in that it has an illumination device as described above on a front side of a liquid crystal panel. Since the liquid crystal display with such a configuration has an illumination device according to the invention as described above, it is possible to prevent attenuation of light reflected by the liquid crystal panel attributable to reflection of the same at a bottom surface of the liquid guide plate of the illumination device, which allows display with a high intensity. In the case of color display, excellent color reproducibility can be achieved because light transmitted by the light guide plate is prevented from being tinted.

Embodiments of the present invention, will now be described, by way of example, with reference to the accompanying diagrammatic drawings, in which:
Fig. 1 is a perspective configuration diagram of a liquid crystal display that is a mode for carrying out the invention;
Fig. 2 is a sectional configuration diagram of the liquid crystal display shown in Fig. 1;
Fig. 3 is a perspective configuration diagram schematically showing a configuration of a surface of the anti-reflection layer shown in Fig. 2;
Figs. 4A and 4B are illustrations showing examples of the arrangement of projections of the anti-reflection layer shown in Fig. 3, Fig. 4A showing an example, that does not constitute an embodiment of the present invention, of an arrangement in the form of a tetragonal lattice, Fig. 4B showing an example of an arrangement in the form of a staggered lattice;
Fig. 5 is a graph showing a result of measurement of reflectance of the light guide plate according to a first embodiment of the invention;
Fig. 6 is a graph showing a result of measurement of intensity of leakage light from a light guide plate according to a second embodiment of the invention;
Fig. 7 is a graph showing a result of measurement of chromaticity of leakage light from the light guide plate according to the second embodiment of the invention;
Fig. 8 is a graph showing a result of measurement of chromaticity of leakage light from a light guide plate according to a third embodiment of the invention;
Fig. 9 is a graph showing a result of measurement of chromaticity of leakage light from a light guide plate according to a fourth embodiment of the invention;
Fig. 10 is a graph showing a result of measurement of chromaticity of leakage light from the light guide plate according to the fourth embodiment of the invention;
Fig. 11 is a graph showing a result of measurement of chromaticity of leakage light from a light guide plate according to a fifth embodiment of the invention; and
Fig. 12 is a sectional configuration diagram of a liquid crystal display with a light guide plate having a configuration according to the related art.

### DETAILED DESCRIPTION OF THE INVENTION

Preferred embodiments of the invention will now be described with reference to the drawings.

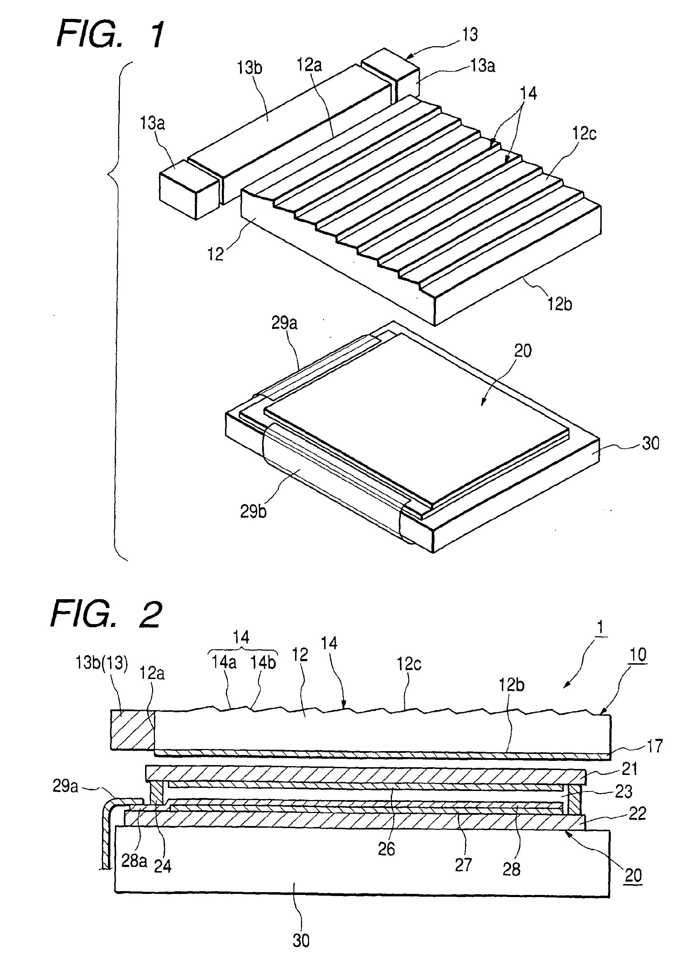

Fig. 1 is a perspective configuration diagram of a liquid crystal display that is a mode for carrying out the invention, and Fig. 2 is a sectional configuration diagram of the liquid crystal display shown in Fig. 1. The liquid crystal display shown in those figures is constituted of a reflection type liquid crystal panel 20 and a front light (illumination device) 10 disposed on a front side of the same.

The front light 10 is constituted of a transparent light guide plate 12 substantially in the form of a flat plate and a light source 13 disposed on a side end face (light entrance surface) 12a of the light guide plate 12. The light guide plate 12 is made of acrylic resin or polycarbonate-type resin; the bottom side of the light guide plate 12 in the figure (the side of the liquid crystal display unit 20) is an exit surface 12b where illumination light from the front light 10 exits; and prism-like features having a sectional view like a triangular wave are formed on the top side (the side opposite to the liquid crystal display unit 20). More specifically, a plurality of projections 14 are formed in parallel with each other, the projections having a gentle slope section 14a formed at an angle to the exit surface 12b and a steep slope section 14b formed at an angle of slope steeper than that of the gentle slope section 14a and having a triangular sectional view. An anti-reflection layer 17 is formed on the exit surface 12b of the light guide plate 12.

The light source 13 disposed on the side end face 12a of the light guide plate 12 is a rod-shaped light source provided along the side end face 12a of the light guide plate 12 and, specifically, light emitting elements 13a constituted of white LEDs are disposed on both ends of a rod-shaped light guide body 13b. Light emitted by the light-emitting elements 13a is introduced into the light guide plate 12 through the light guide body 13b. By providing the rod-shaped light guide body 13b between the light-emitting elements 13a and the light guide plate 12, the side end face 12a of the light guide plate 12 can be uniformly illuminated with the light from the light-emitting elements 13a that are point light sources.

Any light source 13 can be used without problem as long as it can introduce light to the side end face 12a of the light guide plate 12 and, for example, a configuration in which light-emitting elements are arranged along the side end face 12a of the light guide plate 12 may be used. Alternatively, a configuration may be employed in which only one light-emitting element 13a is provided.

The front light 10 having the above-described configuration introduces light emitted by the light source 13 into the light guide plate 12 through the side end face 12a of the light guide plate 12 and changes the propagating direction of the light by reflecting the light propagating therein at the steep slope sections 14b of the projections 14 that are provided on a reflecting surface 12c to cause it to exit from the exit surface 12b as illumination light.

One of major features of the light guide plate 12 of the front light 10 of the present mode for carrying out the invention is that the anti-reflection layer 17 is formed on the exit surface 12b and that the anti-reflection layer has a configuration in which microscopic recesses or projections on a submicron order are arranged and formed like a lattice.

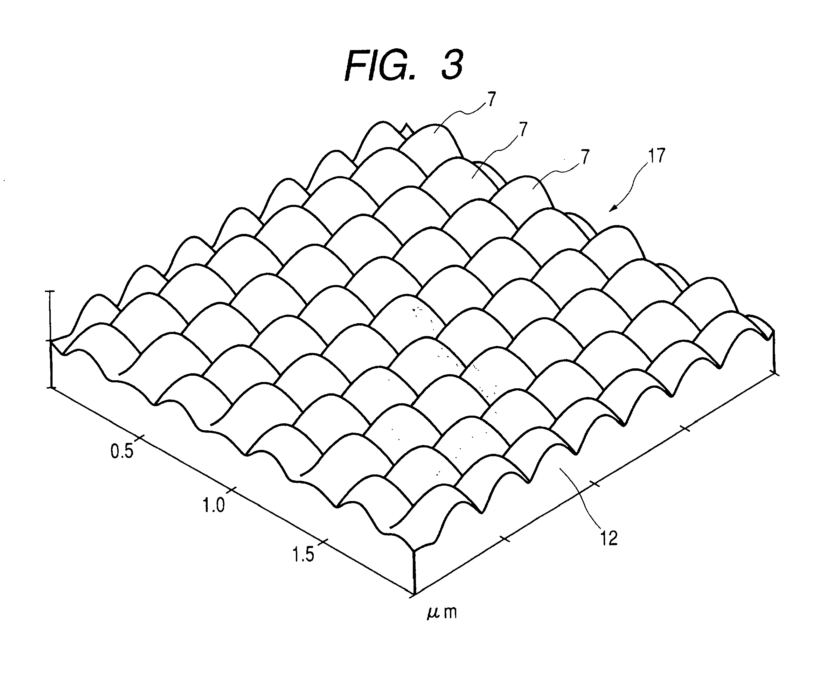

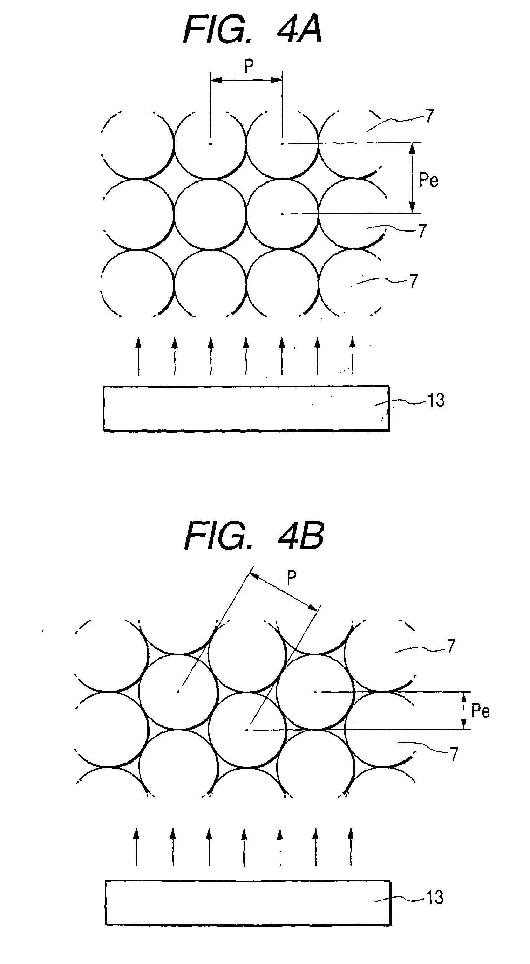

The anti-reflection layer 17 will now be described with reference to Figs. 3, 4A, and 4B. Fig. 3 is a partial perspective view of the anti-reflection layer 17 schematically showing a configuration of a surface thereof. Figs. 4A and 4B are schematic plan views showing examples of the arrangement of microscopic projections (recesses) that make up the anti-reflection layer, Fig. 4A showing an example, that does not constitute an embodiment of the present invention, in which the projections are arranged in the formof a tetragonal lattice, Fig. 4B showing an example of an arrangement in the form of a staggered lattice.

As shown in Fig. 3, a multiplicity of microscopic projections 7 having diameters in the range from about 0.15 to 0.4 µm are formed in an arrangement like a staggered lattice on a surface of the anti-reflection layer 17, which allows light in a wide wave range to be transmitted with a high transmittance. Reflection of light can be prevented by providing such microscopic concave or convex features because each of the projections is arranged and formed with a height and a repetitive pitch equal to or less than the wavelength of a visible region to prevent light incident thereupon from being reflected, as disclosed in an article of Faunhofer Gesellshaft in Germany.

Since the anti-reflection layer 17 is provided, there is substantially no reflection light when light impinges upon the exit surface 12b after propagating in the light guide plate 12, which allows the liquid crystal panel 20 to be efficiently illuminated. Further, since there is substantially no reflection inside the exit surface 12b, a whitening effect is suppressed which otherwise occurs when light reflected by the exit surface 12b reaches a user, and this makes it possible to improve display quality through an improvement in contrast.

The anti-reflection layer 17 also effectively works when light reflected by the reflection type liquid crystal panel 20 impinges upon the exit surface 12b of the light guide plate 12 to allow the light reflected by the liquid crystal panel 20 to be transmitted with a high transmittance, thereby providing display with a high intensity consequently. When light reflected by the liquid crystal panel 20 is reflected by the exit surface 12b of the light guide plate 12, a part of display light is lost to reduce the intensity thereof, and display contrast is also reduced by whitening of the light guide plate 12 attributable to the reflection at the exit surface 12b. In the light guide plate 12 according to the invention, the above-described phenomenon can be prevented because the anti-reflection layer 17 is provided.

According to the invention, the pitch of the projections 7 is preferably 0.3 µm or less, and the height of the projections 7 is preferably 0.2 µm or more. One reason is that light can be tinted when it enters the light guide plate if the pitch exceeds 0.3 µm. Another reason is that the anti-reflection effect becomes insufficient to result in a high reflectance when the height of the projections 7 is less than 0.2 µm.

While the transmittance of the anti-reflection layer 17 can be higher the smaller the pitch of the projections 7, it is difficult to arrange and form the projections 7 that are as very small as 0 . 2 µm with uniform dimensions and, since this can also result in an increase in the manufacturing cost, a practical lower limit of the pitch of the projections 7 is about 0-2 µm.

Arrangements of the projections 7 that constitute the anti-reflection layer 17 will now be described with reference to Figs 4A and 4B. The projections 7 of the anti- reflection layer 17 according to the present mode for carrying out the invention are arranged in the form of a staggered lattice as shown in Fig. 4B, and the anti-reflection layer 17 is preferably formed such that a direction in which it has a minimum effective pitch is in parallel with a main light guide direction in the plane of the light guide plate 12.

The main light guide direction in the plane of the light guide plate 12 is a direction from the light exit surface of the light guide body 13b toward the side end face of the light guide plate 12 (the direction from the side end face 12a of the light guide plate toward the face opposite to the side end face 12a) when the rod-shaped light source 13 is disposed on the side end face 12a of the light guide plate 12 as in the front light 10 in the present mode for carrying out the invention, as shown in Fig. 4B.

In Fig. 4A, an effective pitch Pe of the projections 7 is equal to a pitch P of projections 7 that are adjacent to each other in the vertical direction of the figure and, in the vertical direction of Fig. 4B, the effective pitch Pe is the vertical distance between the centers of projections 7 that are adjacent to each other in the diagonal direction of the figure and is equal to 1/2 of the actual pitch P.

Thus, the effective pitch Pe of the projections 7 can be smaller in the arrangement in the form of a staggered lattice in Fig. 4B than in the arrangement in the form of a tetragonal lattice in Fig. 4A, and the possibility of reflection of light at the anti-reflection later 17 can be reduced by making the direction in which the effective pitch Pe is minimized and the main light guide direction of the light guide plate 12 parallel with each other, which makes it possible to prevent color reproducibility of the liquid crystal display from being reduced by tinting of light transmitted or reflected by the anti-reflection layer 17.

in the light guide plate 12 according to the invention, the effective pitch of the projections 7 in the main light guide direction of the light guide plate 12 is preferably 0.15 µm or less. The anti-reflection effect of the anti-reflection layer 17 can be improved by keeping the pitch in such a range, which makes it possible to improve the display quality of the liquid crystal display. When the effective pitch exceeds 0.15 µm, the effect of improving the anti-reflection property of the anti-reflection layer 17 is reduced.

In the light guide plate 12 according to the invention, an anti-reflection layer 17 may be formed also on the side end face 12a where the light source 13 is provided instead of providing the anti-reflection layer 17 only on the exit surface 12b. With such a configuration, since reflection at the side end face 12a of the light guide plate 12 can be also suppressed when light is introduced into the light guide plate 12 from the light source 13 (light guide body 13b), the utilization of the light source can be further improved to improve the intensity of the front light 10.

The liquid crystal panel 20 has a configuration in which a liquid crystal layer 23 is sandwiched between a top substrate 21 and a bottom substrate 22 that are provided in a face-to-face relationship and in which the liquid crystal layer 23 is sealed by a sealing material 24 provided in the form of a frame along inner circumferential edges of the substrates 21 and 22. In a liquid crystal display 1 shown in Fig. 1, it is supported by a mold 30 provided outside the bottom substrate 22 and is connected to a control circuit (not shown) provided on a bottom surface of the mold 30 that is shown (opposite to the liquid crystal panel 20) through flexible substrates 29a and 29b that are laid around an outer periphery of the mold 30. A liquid crystal control layer 26 is formed inside the top substrate 21 (on the side thereof facing the bottom substrate 22); a reflection layer 27 having a metal thin film for reflecting illumination light from the front light 10 and external light is formed inside the bottom substrate 22 (on the side thereof facing the top substrate 21); and a liquid crystal control layer 28 is formed on the reflection layer 27.

The liquid crystal control layers 26 and 28 have a configuration including an electrode for controlling the driving of the liquid crystal layer 23 and an alignment film, and they also include a semiconductor element for switching the electrode. A color filter for color display may be provided as occasions demand. As shown in Fig. 2, the liquid crystal control layer 28 on the bottom substrate 22 is formed such that it outwardly extends beyond the sealing material 24 and is connected to the flexible substrate 29a at an end 28a thereof. The liquid crystal control layer 26 on the top substrate 21 is connected to the flexible substrate 29b shown in Fig. 1, although not shown in detail.

The reflection layer 27 has a reflection film that is constituted of a metal thin film having a high reflectance such as aluminum or silver for reflecting external light incident upon the liquid crystal panel 20 and illumination light from the front light 10, and it preferably has a light scattering section for preventing any increase in the intensity of reflected light in a particular direction that can reduce the visibility of the liquid crystal display. The light scattering section may be a reflection film provided with concave and convex features or scattering film that is a resin film having resin beads with a refractive index different from that of the material of the resin film dispersed therein.

The liquid crystal display 1 in the present mode for carrying out the invention having the above-described configuration is capable of reflective display utilizing external light in an environment in which sufficient external light can be obtained. In an environment in which no sufficient external light is obtained, it can perform display by turning on the front light 10 to use resultant light exiting at the exit surface 12b of the light guide plate 12 as illumination light.

Since the anti-reflection layer 17 is provided on the light guide plate 12 of the front light 10, light introduced into the light guide plate 12 from the light source 13 can be taken out from the exit surface 12b efficiently, which makes it possible to perform display with a high intensity by increasing the quantity of illumination light that enters the liquid crystal panel 20.

Further, the light that has entered the liquid crystal panel 20 is reflected by the reflection layer 27 on the bottom substrate 22 to enter the light guide plate 12 again and passes through the light guide plate 12 to reach a user. In the liquid crystal display 1 in the present mode for carrying out the invention, since the anti-reflection layer 17 is provided on the light guide plate 12, the reflection light from the liquid crystal panel 20 reaches the user with substantially no reflection at the exit surface 12b of the light guide plate. Since this makes it possible to prevent any reduction in the intensity of display light attributable to reflection at the exit surface 12b of the light guide plate 12 and to prevent whitening of the light guide plate 12 attributable to reflection at the exit surface 12b, display with a high intensity and high contrast can be achieved.

### (Method of Manufacturing the Light Guide Plate)

A method of manufacturing the light guide plate in the present mode for carrying out the invention will now be described. It is not the case that the light guide plate according to the invention can be manufactured only using the manufacturing method described below.

The light guide plate 12 shown in Fig. 1 can be manufactured through injection molding using a die. Specifically, a cavity section of a die for forming the light guide plate 12 has a configuration in which microscopic recesses or projections on a submicron order are arranged and formed on a wall for forming the exit surface of the light guide plate 12, and injection molding is performed using the die, which makes it possible to transfer the concave or convex features of the cavity section to the exit surface of the light guide plate, thereby forming the anti-reflection layer on the exit surface of the light guide plate.

Referring to the concave or convex features formed on the wall of the cavity section, the pitch of the recesses or projections thus formed is preferably 0. 3 µm or less; they are configured such that the recesses or projections are arranged in the form of a staggered lattice; and, more preferably, the arranging direction of the pitch of the recesses or projections is preferably set such that an effective pitch of the recesses or projections is minimized in a direction perpendicular to the wall of the cavity section associated with the side end face 12a of the light guide plate 12. Such a configuration makes it possible to manufacture a light guide plate which has a high anti-reflection effect and which is not tinted as described in the above mode for carrying out the liquid crystal display.

The use of such a manufacturing method makes it possible to manufacture a light guide plate having an anti-reflection layer quite efficiently without adding any new step. It is possible to manufacture a light guide plate having an anti-reflection property that is equivalent to or higher than that achievable according to methods wherein an anti-reflection layer is formed using film forming methods in the related art at a lower cost in a shorter time.

The concave or convex features for forming the anti-reflection layer on the die used in the manufacturing method in the present mode for carrying out the invention may be formed by patterning the wall of the die with an electron beam lithography apparatus and performing an etching process thereafter. The above-described method is not essential, and the anti-reflection layer of the light guide plate may be formed by disposing a stamper having concave or convex features at the cavity section of the die. The stamper for forming the anti-reflection layer may be fabricated using known methods such as electromolding of Ni.

A light guide plate having an anti-reflection layer also on the side end face 12a can be fabricated by forming microscopic concave or convex features similar to those described above on a wall of the cavity section of the die associated with the side end face 12a of the light guide plate 12.

The invention will now be described in more detail with reference to embodiments of the same.

### (First Embodiment)

First, a die formed with a cavity section having recesses or projections that are the reverse of the outline of a light guide plate was prepared, and a wall of the die associated with an exit surface of the light guide plate was patterned using an electron beam lithography apparatus and was thereafter subjected to an etching process to arrange and form a multiplicity of recesses on the wall associated with the exit surface of the light guide plate. The recesses formed on the die were arranged in the form of a staggered lattice; the pitch between them was 0.25 µm; and the depth of the recesses was 0.25 µm.

Next, injection molding was performed by injecting an acrylic resin material into the die to fabricate a light guide plate of 40 mm (w) × 50 mm (l) × 0.8 mm (t) having an anti-reflection layer on an exit surface thereof. The shape of the exit surface of the light guide plate thus fabricated was measured using AFM (Atomic Force Microscopy), which revealed that microscopic projections having heights in the range from 0.23 to 0.24 µm had been uniformly arranged and formed like a staggered lattice with a pitch of 0.25 µm.

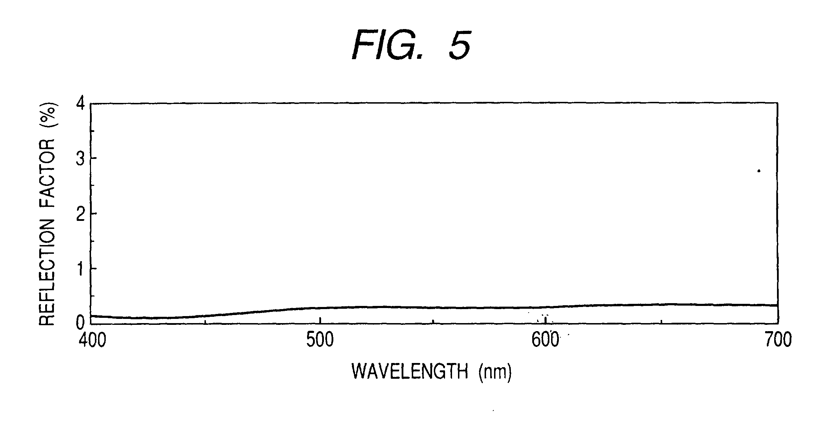

Then, the reflectance of the exit surface of the light guide plate thus obtained was measured. Fig. 5 shows the result of the measurement. It was revealed that the reflectance was less than 0.5 % in a wave range of 400 to 700 nm as shown in the graph of Fig. 5 and that the exit surface of the light guide plate had an anti-reflection function. A light guide plate was fabricated which had the same configuration as that of the guide plate fabricated in the present embodiment except that no anti-reflection layer was formed on the exit surface, and the reflectance of the exit surface was measured, which resulted in a reflectance ranging from 4 to 5 %.

### (Second Embodiment)

In order to check a difference in the anti-reflection effect attributable to the pitch of the projections that constitute the anti-reflection layer of the light guide plate, three types of light guide plates different from each other only in the pitch of projections were fabricated using the same fabrication method as that in the first embodiment. Specifically, three types of dies in which the recesses formed in the cavity section had pitches of 0.25 µm, 0.3 µm, and 0.4 µm were prepared, and the three types of light guide plates were fabricated by performing injection molding using those dies.

The shapes of the exit surfaces of the resultant light guide plates were checked with AFM, which revealed that the projections were formed with pitches of 0.25 µm, 0.3 µm, and 0.4 µm respectively and that the height of the projections was in the range from 0.25 to 0.27 µm in any of the light guide plates.

A front light was then fabricated by disposing a rod-shaped light source having white LEDs on both sides thereof on a side end face of a shorter side of each of the light guide plates obtained as described above.

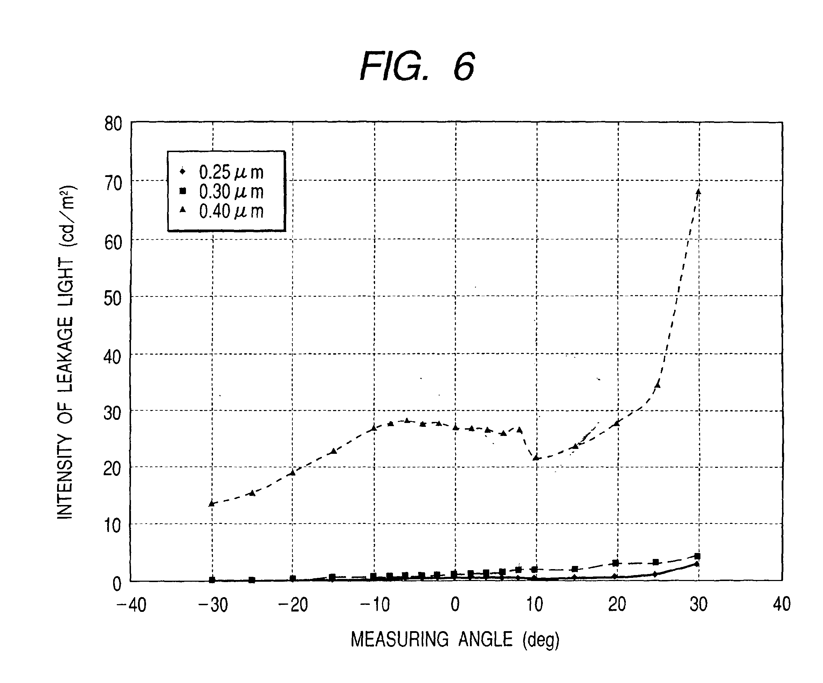

Next, leakage of light on top surfaces of the light guide plates (surfaces opposite to the exit surfaces) was measured with the respective front lights turned on. The measurement of leakage light was carried out by moving a detector for detecting leakage light in a range from -30 deg to 30 deg, the normal direction of the light guide plates being 0 deg; inclinations toward the side end face where the light source was disposed in the light guide direction in the plane of the light guide plate being on the negative side; and inclinations in the opposite direction being on the positive side. The result is shown in the graph of Fig. 6. The abscissa axis indicates angles of the detector, and the ordinate axis indicates the intensity of leakage light.

As shown in Fig. 6, it was revealed that leakage of light from the light guide plates with projection pitches of 0.25 µm and 0.3 µm was significantly smaller than leakage light from the light guide plate with a projection pitch of 0.4 µm and that an excellent anti-reflection effect was achieved. It was therefore revealed that the light guide plates with projection pitches of 0.3 µm or less were capable of guiding light from the light source to the exit surface of the light guide plate efficiently. It is indicated that high display quality can be achieved with high contrast and intensity because there is only a small quantity of leakage light on the top surface of the light guide plate and hence no reduction in the visibility of display even when provided on a front side of a liquid crystal panel.

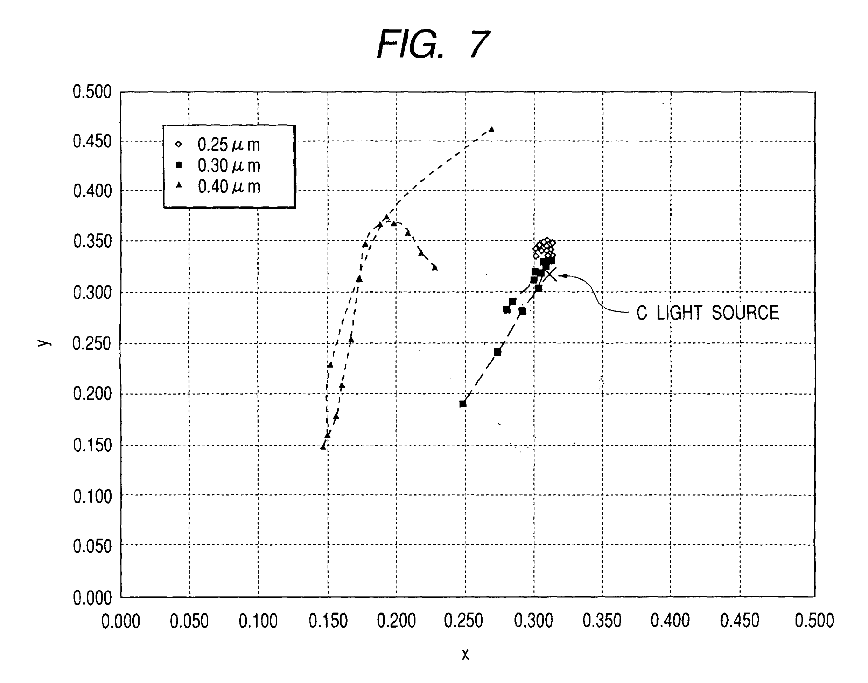

Next, chromaticity of leakage light from each of the light guide plates was measured. The measurement was carried out by changing the angle of the detector in the range from -30 deg to 30 deg in the light guide direction in the plane of the light guide plate in a way similar to that of the above-described measurement of leakage light. The result of the measurement is shown in Fig. 7. Fig. 7 is an x-y chromaticity diagram, and the point indicated by the symbol x in the graph represents a C light source (white).

As shown in Fig. 7, it is apparent that chromaticity of the light guide plates with projection pitches of 0.25 µm and 0.3 µm is less dependent on angles and is concentrated in the vicinity of the C light source. That is, it is indicated that when liquid crystal displays are configured by providing the front lights on a front side of liquid crystal panels, the liquid crystal panels exhibit high reproducibility of display color with no tinting of display even when observed in a diagonal direction. The light guide plate with a projection pitch of 0.25 µm has a smaller distribution of chromaticity and is subjected to less tinting, and it may therefore be regarded as a light guide plate having better color reproducibility. On the contrary, in the case of the light guide plate with a projection pitch of 0.4 µm, the chromaticity resides far away from that of the C light source and has a great distribution, and it is therefore regarded lower in color reproducibility than the light guide plates with smaller pitches because leakage light from the same is tinted with some color and the color varies depending on angles.

### (Third Embodiment)

In order to check effects provided by an arrangement of projections on an anti-reflection layer of a light guide plate, two types of light guide plates were fabricated which were different only in the arrangement of projections.

First, there were prepared a die in which recesses were arranged and formed like a tetragonal lattice on a wall of a cavity section thereof and a die in which recesses were arranged and formed like a staggered lattice. In either of the dies, the recesses had a pitch of 0.3 µm, and the depth of the recesses was 0.3 µm. Then, a light guide plate was fabricated through injection molding using each of the dies. The shapes of exit surfaces of the resultant light guide plates were measured using AFM, which revealed that the projections thus formed were arranged in the form of a tetragonal lattice and a staggered lattice respectively and that either of the light guide plates had microscopic projections with a pitch of 0.3 µm and a height in the range from 0.27 to 0.29 µm arranged and formed thereon.

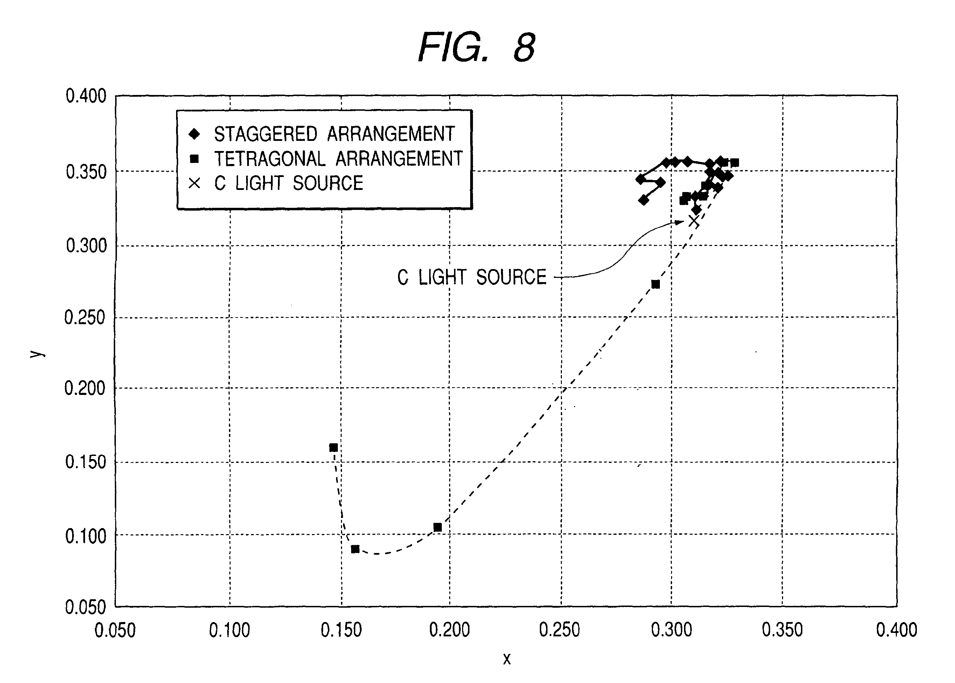

Then, a front light was configured by disposing a rod-shaped light source on a side end face of each of the light guide plates thus fabricated, and the chromaticity of leakage light was measured in the same way as that in the second embodiment with those front lights turned on. The result is shown in Fig. 8. As shown in Fig. 8, it was revealed that the chromaticity of the light guide plate with the projections arranged and formed like a staggered lattice is smaller in distribution than the light guide plate with the projections arranged and formed like a tetragonal lattice, is concentrated in the vicinity of the C light source, and is subjected to less tinting. It is indicated that the chromaticity of light guide plate with the projections arranged in the form of a tetragonal lattice has a tendency to move away from that of the C light source in case of large measured angle and that a slight change occurs in a display color because the light guide plate is less tinted when viewed frontways and is tinted slightly more when viewed in a diagonal direction.

### (Fourth Embodiment)

In order to check how anti-reflection characteristics of a light guide plate are affected by the relationship between the main light guide direction of the light guide plate and the direction in which projections of the anti-reflection layer are arranged, two types of light guide plates different in the arranging direction of projections that constitute anti-reflection layers were fabricated using the same manufacturing method as that of the first embodiment. The light guide plates had the same projection pitch of 0.25 µm and had substantially the same projection height in the range from 0.23 to 0.24 µm.

Referring to the arranging direction of the projections of each of the light guide plates, they were fabricated such that one was formed projections arranged in a direction in parallel with the main light guide direction of the light guide plate and such that the other was formed with projections arranged in a direction orthogonal to the main light guide direction of the light guide plate. The former light guide plate had an effective pitch of 0.125 µm in the main light guide direction, and the latter had an effective pitch of 0.217 µm. Specifically, referring to the arrangement of the former, the projections of the anti-reflection layer are arranged such that the effective pitch in the main light guide direction of the light guide plate is minimized.

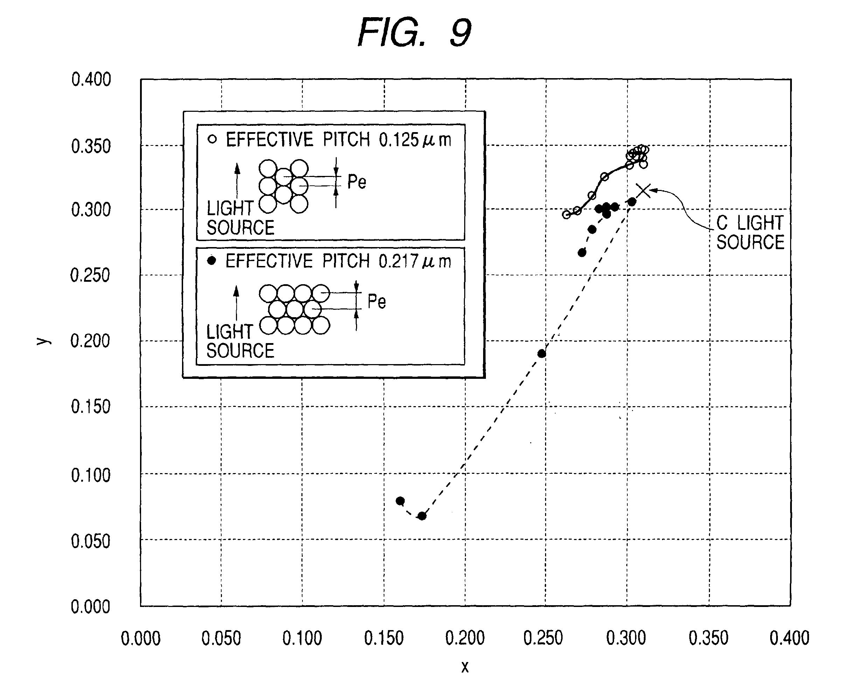

Next, front lights were configured by disposing rod-shaped light sources on side end faces of the two types of light guide plates obtained as described above, and chromaticity was measured in the same way as that in the second embodiment with those front light turned on. The result is shown in Fig. 9. As shown in the chromaticity diagram in Fig. 9, it was revealed that the chromaticity distribution of the light guide plate with an effective pitch of 0. 125 µm of the anti-reflection layer was concentrated in the vicinity of the C light source compared to the light guide plate with an effective pitch of 0.217 µm of the anti-reflection layer and that it was less tinted and subjected to smaller changes in chromaticity when obverted in a diagonal direction. On the contrary, the chromaticity of the light guide plate having an effective pitch of 0.217 µm resides in the vicinity of the C light source when viewed frontways to result in less tinting, but tinting became more significant when viewed in a diagonal direction.

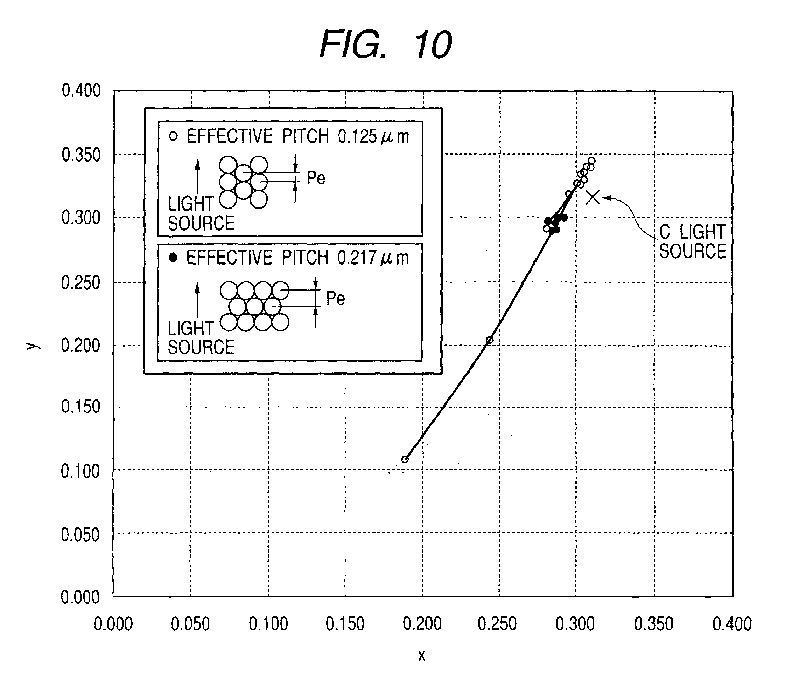

Next, the chromaticity of the two types of light guide plates was measured with the measuring angle varied in a direction orthogonal to the main light guide direction of the light guide plates. That is, the angle dependence of leakage light in a direction in parallel with side end faces of the light guide plates was checked. The measuring angle was in the range from -30 deg to 30 deg. The result is shown in Fig. 10. As shown in the figure, the chromaticity distribution of the light guide plate with the minimum effective pitch in the main light guide direction of the light guide plate was greater than the light guide plate having an effective pitch of 0.217 µm in the direction in parallel with the side end face of the light guide plate conversely to the measurement in the main light guide direction. The reason is supposed to be the fact that leakage light in the direction in parallel with the side end face of the light guide plate is light as a result of reflection of light that entered in a direction nearly perpendicular to the main light guide direction and that the effective pitch of 0.217 µm results in a smaller pitch of the features orthogonal to the traveling light. When combined with a liquid crystal panel, what is important is that there is a small chromaticity distribution in the vertical direction when viewed by a viewer, and a chromaticity distribution in the horizontal direction is less likely to cause problems in practice. It is therefore preferable to use the light guide plate with the minimum effective pitch in an application in which the rod-shaped light source is provided at a top end or bottom end of the light guide plate as viewed by a viewer.

It was revealed that tinting of leakage light can be suppressed by making an effective pitch of projections of a light guide plate smaller in the main light guide direction thereof. From the results shown in Fig. 9 and Fig. 10, it is assumed that chromaticity can be substantially concentrated in the vicinity of a C light source when the effective pitch of an anti-reflection layer is 0.15 µm or less. However, it is difficult to arrange and form projections like a tetragonal lattice with a pitch of 0.15 µm or less, and it is quite advantageous from the viewpoint of manufacture and cost to arrange projections like a staggered lattice while achieving characteristics equivalent to those available with projections having a smaller pitch as in the light guide plate according to the invention.

### (Fifth Embodiment)

Next, in order to compare an anti-reflection layer having a multi-layer film structure according to the related art and an anti-reflection layer according to the invention, a light guide plate having a configuration according to the related art was fabricated as a comparative sample. Specifically, a light guide plate having no concave or convex features formed on an exit surface thereof was fabricated using injection molding, and an anti-reflection layer constituted of SiO₂ layers and TiO₂ layers alternately and periodically stacked was formed on the exit surface of the light guide plate using vacuum deposition. Then, a rod-shaped light source was disposed on a side end face of the light guide plate to provide a front light for comparison.

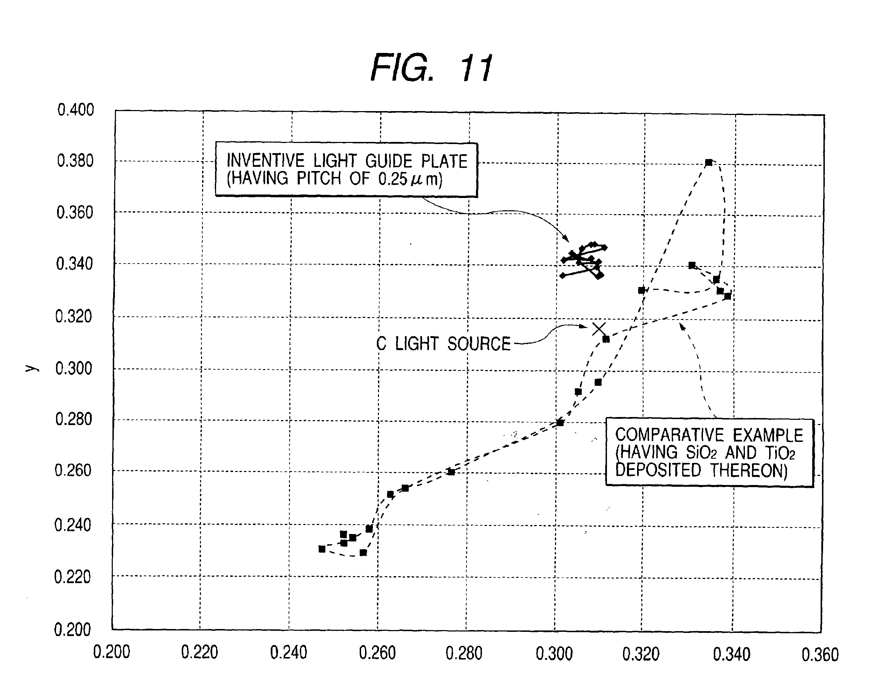

Chromaticity was measured in the same way as that in the second embodiment with the front light for comparison turned on. The result of the measurement is shown in the chromaticity diagram in Fig. 11. For comparison, Fig. 11 also shows a result of measurement of chromaticity of the light guide plate whose anti-reflection layer has a projection pitch of 0.25 µm fabricated in the second embodiment. As shown in the figure, the front light for comparison formed with an anti-reflection layer according to the related art has a great distribution of chromaticity, and leakage light from the same is tinted depending on the viewing angle, which indicates that it reduces color reproducibility in a diagonal direction significantly when combined with a liquid crystal panel. It was therefore revealed that a liquid crystal display having a viewing angle greater than those in the related art can be provided by combining a light guide plate according to the invention and a liquid crystal panel.

As described above in detail, a light guide plate according to the invention has a structure into which light from a light source is introduced at a side end face thereof and from which the light propagating therein exits at an exit surface. Since an anti-reflection layer having microscopic recesses or projections on a submicron order arranged and formed in the form of a lattice is provided on the exit surface, the light propagating in the light guide plate can efficiently exit from the exit surface, which makes it possible to configure an illumination device which utilizes a light source efficiently and which has a high intensity.

When a light guide plate according to the invention is provided with a configuration in which the microscopic recesses or projections are arranged in the form of a staggered lattice, the recesses or projections can be provided in a density higher than that in a tetragonal arrangement of the recesses or projections, which makes it possible to achieve a small effective pitch of arrangement thereby improving an anti-reflection effect and to prevent light transmitted or reflected by the anti-reflection layer from being tinted.

When the arranging direction of the recesses or projections of the light guide plate according to the invention formed in a staggered arrangement is a direction in which the effective pitch of the recesses or projections in a main light guide direction in the plane of the light guide plate is minimized, a more excellent anti-reflection effect can be achieved.

A method of manufacturing a light guide plate according to the invention is a method of manufacturing a light guide plate having a structure into which light from a light source is introduced at a side end face thereof and from which the light propagating therein exits at an exit surface through injection molding using a die.

The method involves a configuration in which a die having microscopic recesses or projections on a submicron order arranged and formed like a lattice on a wall of a cavity section for forming the light guide plate associated with the exit surface of the light guide plate is used and in which the shape of the microscopic recesses or projections is transferred to the light guide plate during injection molding. Since this makes it possible to form an anti-reflection layer on the exit surface of the light guide plate at the same time when the light guide plate is injection-molded, a light guide plate can be easily manufactured at a low cost with a quite excellent manufacturing efficiency.

An illumination device according to the invention has a configuration including a light guide plate according to the invention as described above, and it is therefore capable of causing light introduced into the light guide plate from a light source to exit from an exit surface of the light guide plate. It is therefore an illumination device which utilizes a light source efficiently and which has a high intensity.

A liquid crystal display according to the invention has an illumination device as described above on a front side of a liquid crystal panel. Since this prevents reflected light from the liquid crystal panel from being reflected and attenuated at a bottom surface of the light guide plate of the illumination device, display with a high intensity can be presented.

## Claims

1. A light guide plate (12) comprising a structure into which light from a light source (13) is introduced at a side end face (12a) thereof and from which the light propagated therein exits at a bottom exit surface (12b) thereof,
wherein an anti-reflection layer (17) having microscopic recesses or projections (7) on a submicron order arranged and formed like a hexagonal close-packed lattice is provided on the exit surface,
**characterized in that** the recesses or projections are oriented such that an effective pitch (Pe) between a first straight line, passing through the centre of a recess or projection and running parallel to the side end face, and a second straight line, passing through the centre of an adjacent recess or projection and running parallel to the side end face, in a main light guide direction, oriented within the plane of the light guide plate in a direction perpendicular to the side end face into which light from the light source is introduced, is about one-half a pitch (P) of the recesses or projections.

2. A light guide plate according to Claim 1, wherein the microscopic recesses or projections thus arranged and formed have a pitch (P) of 0.3 µm or less.

3. A light guide plate according to Claim 1, wherein the effective pitch is 0.15 µm or less.

4. A method of manufacturing a light guide plate according to Claim 1 through injection molding utilizing a die, wherein a die having microscopic recesses or projections on a submicron order arranged and formed like a staggered lattice with a pitch of 0.3 µm or less is used on a wall of a cavity section for forming the light guide plate associated with the exit surface of the light guide plate to transfer the shape of the microscopic recesses or projections to the light guide plate during injection molding.

5. An illumination device comprising a light guide plate according to Claim 1 and a light source disposed on a side end face of the light guide plate.

6. A liquid crystal display comprising an illumination device according to Claim 5 provided on a front side of a liquid crystal panel.

## Patentansprüche

1. Lichtleitplatte (12) mit einer Konstruktion, bei der Licht von einer Lichtquelle (13) an einer Endfläche (12a) an einer Seite der Lichtleitplatte eingeleitet wird und bei der das sich in dieser fortpflanzende Licht an einer Boden-Austrittsfläche (12b) der Lichtleitplatte,
wobei eine Antireflexionsschicht (17) mit mikroskopischen Vertiefungen oder Erhebungen (7) im Submikrometerbereich in einer Anordnung und Formgebung in der Art eines Gitters in sechseckiger dichter Packung an der Austrittsfläche vorgesehen ist,
**dadurch gekennzeichnet, dass** die Vertiefungen oder Erhebungen derart orientiert sind, dass eine effektive Teilung (Pe) zwischen einer ersten geraden Linie, die durch das Zentrum einer Vertiefung oder Erhebung hindurch geht und parallel zu der Endfläche an einer Seite verläuft, und einer zweiten geraden Linie, die durch das Zentrum einer benachbarten Vertiefung oder Erhebung hindurch geht und parallel zu der Endfläche an einer Seite verläuft, in einer Hauptlichtleitrichtung, die in der Ebene der Lichtleitplatte in einer Richtung rechtwinklig zu der Endfläche an der Seite orientiert ist, in die Licht von der Lichtquelle eingeleitet wird, in etwa die Hälfte einer Teilung (P) der Vertiefungen oder Erhebungen beträgt.

2. Lichtleitplatte nach Anspruch 1,
wobei die in dieser Weise angeordneten und ausgebildeten mikroskopischen Vertiefungen oder Erhebungen eine Teilung (P) von 0,3 µm oder weniger aufweisen.

3. Lichtleitplatte nach Anspruch 1,
wobei die effektive Teilung 0,15 µm oder weniger beträgt.

4. Verfahren zum Herstellen einer Lichtleitplatte gemäß Anspruch 1 durch Spritzgießen unter Verwendung einer Form, wobei eine Form mit mikroskopischen Vertiefungen oder Erhebungen im Submikrometerbereich, die nach Art eines versetzten Gitters mit einer Teilung von 0,3 µm oder weniger angeordnet und ausgebildet sind, an einer der Austrittsfläche der Lichtleitplatte zugeordneten Wand eines Hohlraumbereichs zum Formen der Lichtleitplatte verwendet wird, um die Formgestalt der mikroskopischen Vertiefungen oder Erhebungen während des Spritzgießvorgangs auf die Lichtleitplatte zu übertragen.

5. Beleuchtungsvorrichtung mit einer Lichtleitplatte gemäß Anspruch 1 und einer Lichtquelle, die an einer Endfläche an einer seite der Lichtleitplatte angeordnet ist.

6. Flüssigkristallanzeige mit einer Beleuchtungsvorrichtung gemäß Anspruch 5, die an einer Vorderseite einer Flüssigkristalltafel vorgesehen ist.

## Revendications

1. Plaque de guidage de lumière (12) comprenant une structure dans laquelle la lumière provenant d'une source de lumière (13) est introduite au niveau d'une face d'extrémité latérale (12a) de celle-ci, et à partir de laquelle la lumière propagée dans celle-ci sort au niveau d'une surface de sortie inférieure (12b) de celle-ci,
dans laquelle une couche antireflet (17) comportant des évidements ou protubérances microscopiques (7), de l'ordre du sous-micron, disposés et formés comme un réseau hexagonal serré, est prévue sur la surface de sortie,
**caractérisée en ce que** les évidements ou protubérances sont orientés de telle sorte qu'un écartement effectif (Pe) entre une première ligne droite, passant par le centre d'un évidement ou d'une protubérance et s'étendant parallèlement à la face d'extrémité latérale, et une seconde ligne droite, passant par le centre d'un évidement ou d'une protubérance adjacent et s'étendant parallèlement à la face d'extrémité latérale, dans une direction principale de guidage de lumière, orientée dans le plan de la plaque de guidage de lumière dans une direction perpendiculaire à la face d'extrémité latérale dans laquelle est introduite la lumière provenant de la source de lumière, représente environ une moitié du pas d'écartement (P) des évidements ou protubérances.

2. Plaque de guidage de lumière selon la revendication 1, dans laquelle les évidements ou protubérances microscopiques ainsi agencés et formés présentent un pas d'écartement (P) de 0,3 µm ou moins.

3. Plaque de guidage de lumière selon la revendication 1, dans laquelle le pas d'écartement effectif est de 0,15 µm ou moins.

4. Procédé de fabrication d'une plaque de guidage de lumière conforme à la revendication 1 par l'intermédiaire d'un moulage par injection à l'aide d'une matrice, dans lequel une matrice présentant des évidements ou protubérances microscopiques de l'ordre du sous-micron, agencés et formés comme un réseau à disposition en quinconce avec un écartement de 0,3 µm ou moins, est utilisée sur une paroi d'une section de cavité pour former la plaque de guidage de lumière associée à la surface de sortie de la plaque de guidage de lumière, pour transférer la forme des évidements ou protubérances microscopiques vers la plaque de guidage de lumière au cours du moulage par injection.

5. Dispositif d'éclairement comprenant une plaque de guidage de lumière selon la revendication 1, et une source de lumière disposée sur une face d'extrémité latérale de ladite plaque de guidage de lumière.

6. Dispositif d'affichage à cristaux liquides, comprenant un dispositif d'éclairement selon la revendication 5 prévu sur un côté avant d'un panneau d'affichage à cristaux liquides.
